# FASCICULE DE BREVET EUROPEEN

(11) **EP 0 858 729 B1**
(45) Date de publication et mention de la délivrance du brevet: **11.12.2002**
(21) Numéro de dépôt: 98400391.3
(22) Date de dépôt: 18.02.1998
(51) Int. Cl.: A01C 3/06, A01D 90/10

(54) **Epandeur de matières organisques telles que du fumier ou du lisier**
Streuer für organisches Gut wie Dung oder Gülle
Spreader for organic material such as manure or slurry

(30) Priorité: 18.02.1997 FR 9701871
(43) Date de publication de la demande: 19.08.1998
(73) Titulaire: CENTRE NATIONAL DU MACHINISME AGRICOLE, DU GENIE RURAL, DES EAUX ET DES FORETS (CEMAGREF), 92160 Antony (FR)
(72) Inventeur: Thirion, François, 03150 Varennes Sur Allier (FR); Chabot, Frédéric, 03150 Varennes Sur Allier (FR)
(74) Mandataire: Laget, Jean-Loup

(56) Documents cités:
- WO-A-91/03150
- FR-A- 2 229 186
- GB-A- 1 392 435

## Description

La présente invention concerne un épandeur de matières organiques telles que du fumier, du lisier, etc. du type constitué par une remorque montée sur roues, tractée ou autotractée, ladite remorque présentant à une extrémité postérieure ouverte des moyens d'expulsion de la matière à épandre appelés "hérissons" et un tapis de fond entraînable en translation de manière à amener de manière continue la matière à épandre vers lesdits moyens d'expulsion au cours de l'épandage. Un épandeur de ce type est connu du WO 91/03150.

Certaines déjections animales telles que le fumier et le lisier sont utilisées à la place des engrais classiques et sont répandues sur les sols à l'aide de ce type d'épandeurs.

Dans le souci de contribuer à la protection de l'environnement et de tirer parti au mieux de ces déchets naturels animaliers, il convient de maîtriser les quantités de déjections solides épandues. En particulier, on cherche à pouvoir évaluer la dose de matières organiques épandues par hectare.

Cette dose de matières organiques par hectare dépend de divers paramètres tels que le volume contenu dans l'épandeur, la densité des matières organiques, le compactage de la matière lors du chargement, le mode de remplissage, la vitesse d'avancée du tapis de fond de l'épandeur et la vitesse d'avancée du tracteur.

Ainsi, pour pouvoir respecter un objectif de dosage par hectare, il est nécessaire de connaître, pour une matière à épandre donnée, la masse totale chargée dans la remorque. On propose alors d'évaluer la densité de cette matière en pesant au préalable un seau rempli de ladite matière et dont la contenance est connue. La densité trouvée est ensuite multipliée par le volume utile de l'épandeur, ce qui fournit à l'agriculteur une information relativement précise du poids du chargement. Il convient ensuite de fixer la distance à parcourir pour vider l'épandeur en respectant la dose voulue par hectare. On se réfère alors à des tables qui donnent cette distance en fonction des largeurs d'épandage utilisées et des doses souhaitées par hectare. Ensuite au cours des premiers épandages, on effectue les réglages nécessaires à un épandage correct, en particulier par rapport à la vitesse d'avancement du tracteur et à la vitesse d'avancement du tapis de fond de l'épandeur. Une fois, ces divers paramètres déterminés, ils sont notés par l'agriculteur qui pourra les réutiliser lors d'épandages ultérieurs.

Cette méthode pour définir les doses d'épandage par hectare n'est cependant pas satisfaisante car elle nécessite diverses manipulations préalables qui ne sont pas toujours réalisées avec une grande rigueur, ce qui donne lieu à des erreurs dans les estimations des divers paramètres d'épandage et entraîne, souvent également, un abandon de ces mesures par les utilisateurs.

Il existe également des systèmes de pesée pour remorques permettant de mesurer le poids total d'un épandeur à l'arrêt, des moyens de mesure étant disposés sous les roues de l'épandeur et à l'avant de celui-ci. On mesure ainsi la masse totale de matières chargées puis on peut ensuite faire fonctionner sur place l'épandeur de manière à mesurer la diminution du poids dudit épandeur au cours d'un épandage. Les valeurs enregistrées sont ensuite traitées pour obtenir une courbe représentant le flux de matières (kg/s) en fonction du temps (s). On mesure ainsi tous les épandeurs selon différents paramètres et avec différents types de matières à épandre.

Cependant, on a pu constater que le taux d'épandage demeurait constant uniquement dans la période de temps allant de 30 à 75 % du temps total d'épandage. Par conséquent, un taux d'épandage moyen durant le temps total d'épandage n'est pas pertinent lorsqu'on utilise cette méthode. Il est alors nécessaire que les conducteurs d'épandeurs régulent leur vitesse d'avancement au cours des périodes où le taux d'épandage est inférieur à ce taux moyen. Ceci est relativement insatisfaisant et donne lieu à des erreurs relativement importantes en début et en fin d'épandage, d'autant plus qu'au fur et à mesure de l'avancement du tas de matière à épandre, l'arrière du tas s'éboule et le débit diminue avec la hauteur du tas.

Enfin, le système de mesure utilisé, relativement coûteux, nécessite l'immobilisation de l'épandeur et son fonctionnement à l'arrêt.

Afin de maîtriser les conditions d'épandage de manière à respecter des impératifs de quantités de matières épandues relativement précises, le but de l'invention est de proposer un épandeur pourvu d'un système de mesure propre à évaluer la masse totale chargée puis à mesurer en continu le débit massique au cours d'un épandage de manière à pouvoir mesurer les variations dudit débit massique et pallier lesdites variations au cours de l'épandage de manière à maintenir un débit massique d'épandage constant par rapport à une valeur théorique dudit débit déterminée au préalable en fonction de la dose souhaitée de matière à épandre par hectare.

A cet effet, l'invention a pour objet un épandeur de matière organique telle que du fumier, du lisier, etc. du type constitué par une remorque montée sur roues, tractée ou auto-tractée, ladite remorque présentant à une extrémité ouverte des moyens d'expulsion de la matière à épandre appelés "hérissons" et un tapis de fond entraînable en translation de manière à amener continuellement la matière à épandre vers lesdits moyens d'expulsion au cours d'un épandage, caractérisé en ce qu'il comporte des moyens de régulation en continu du débit massique au cours d'un épandage, lesdits moyens étant agencés pour mesurer, de manière continue, le débit massique et pour exercer un contrôle de la vitesse du tapis de fond de la remorque.

De préférence, les moyens de régulation du débit comportent des moyens de mesure et une unité de traitement des mesures et de contrôle de la vitesse d'avancée du tapis de fond.

De préférence, les moyens de mesure en continu du débit massique sont agencés pour mesurer de manière continue la masse de matières organiques sur le point d'être épandue.

Ainsi, selon l'invention, on détermine la masse de matière à épandre sur le point d'être épandue au fur et à mesure de l'épandage et on peut ainsi également évaluer en continu la valeur du débit massique d'épandage. En fonction des variations de la masse sur le point d'être épandue, on évalue les variations du débit massique par rapport à une valeur de débit massique d'épandage déterminée en fonction de la dose de matière à épandre par hectare. Au vu des variations de débit massique, on exerce alors une régulation sur la vitesse du tapis de fond de manière à pallier la variation et à maintenir un débit constant.

La masse de matière sur le point d'être épandue correspondant, lorsque la remorque est totalement chargée, à une proportion donnée de la masse totale du chargement, les moyens de mesure permettent également d'évaluer ladite masse totale du chargement avant un épandage.

Ainsi, en fonction de la dose de matière organique désirée par hectare, on choisit un certain débit massique d'épandage et, au cours de l'épandage, les moyens de régulation permettront l'évaluation de manière continue dudit débit et l'exercice d'un contrôle sur la vitesse d'avancée du tapis de fond de manière à respecter une valeur de débit choisie.

Ainsi, avec un épandeur selon l'invention, on peut obtenir de manière simple la masse totale du chargement, les informations relatives à la quantité de matières organiques déjà épandues et une régulation du débit massique d'épandage de manière à se conformer aisément à un plan d'épandage défini préalablement.

Selon un mode de réalisation préféré, les moyens de mesure sont constitués d'un plateau intégré dans le fond de la remorque à proximité de l'extrémité d'expulsion de ladite remorque, ledit plateau étant agencé pour exercer, sous l'effet de la matière à épandre qu'il supporte, une force sur au moins un capteur de force ou de pression, ledit capteur de force ou de pression étant relié à l'unité de traitement des mesures et de commande de la vitesse d'avancée du tapis de fond.

L'unité de traitement des mesures comporte, de préférence, au moins des moyens de mémorisation, des moyens de calcul, des moyens de comparaison avec des données préalablement mémorisées et des moyens de commande propres à réguler la vitesse d'avancée du tapis de fond.

L'invention a également pour objet un procédé de régulation du débit massique d'un épandeur selon l'invention caractérisé en ce qu'on mesure, en continu, le débit massique au cours de l'épandage et on exerce un contrôle de la vitesse d'avancée du tapis de fond.

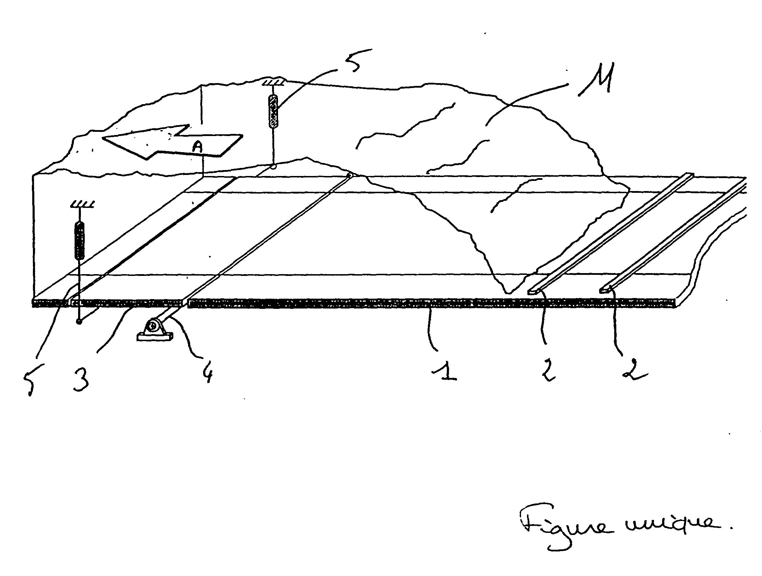

On décrira maintenant plus en détail un exemple du mode de réalisation préféré de l'invention en référence au dessin dans lequel la figure unique représente une vue schématique partielle en perspective d'un épandeur.

Un épandeur selon l'invention comporte une remorque définissant un volume utile de matière organique à épandre M dont le fond 1 comporte un tapis de fond entraînable en translation dans le sens d'un entraînement de la matière à épandre M vers l'extrémité d'expulsion de la remorque selon le sens de la flèche A. Le tapis de fond est généralement constitué de barrettes 2 dont les extrémités sont fixées à des moyens d'entraînement en translation. Pour des raisons de clarté, seules quelques barrettes 2 ont été représentées.

Une portion du fond 1 à proximité de l'extrémité d'expulsion de la remorque est constituée d'un plateau 3. Ce plateau 3 est intégré dans le fond 1 de manière à être libre de basculer autour d'un axe 4 s'étendant sous ledit plateau 3, sensiblement le long d'un bord longitudinal dudit plateau 3, ou le long dudit bord longitudinal (non représenté) de telle sorte que la matière à épandre M reposant sur le plateau 3 tend à provoquer le basculement dudit plateau 3 autour de l'axe 4.

Afin de ne pas gêner l'avancée de la matière à épandre M vers l'extrémité d'expulsion, le plateau 3 est maintenu sensiblement immobile par l'axe 4 et les capteurs 5 dans le prolongement du fond 1 de l'épandeur.

A chaque extrémité de l'autre bord longitudinal du plateau 3, sont installées, sous ledit plateau 3, deux jauges de contrainte 5.

Ainsi, lorsque le plateau 3 est entraîné en basculement autour de l'axe 4 sous l'effet du poids de matière à épandre M supportée par ledit plateau 3, celui-ci exerce une pression sur les jauges de contrainte 5. La valeur de cette pression mesurée par les jauges de contrainte 5 est envoyée vers l'unité de traitement et de contrôle qui permet alors de déterminer la masse de matière sur le point d'être épandue supportée par ledit plateau 3.

En fonction des variations de la masse de la matière M sur le point d'être épandue, l'unité de traitement détermine les variations du débit massique et exerce alors un contrôle sur la vitesse d'avancée du tapis de fond de la remorque de manière à maintenir un débit massique sensiblement constant au cours d'un épandage.

Un épandeur selon l'invention permet donc d'obtenir des épandages de matières en fonction d'un dosage par hectare défini et ce de manière précise tout en étant simple d'utilisation. Les moyens de régulation peuvent être utilisés également uniquement pour déterminer la masse totale chargée lors du chargement de l'épandeur.

## Revendications

1. Epandeur de matière organique (M) telle que du fumier, du lisier, etc. du type constitué par une remorque montée sur roues, tractée ou auto-tractée, ladite remorque présentant à une extrémité ouverte des moyens d'expulsion de la matière à épandre (M) appelés "hérissons" et un tapis de fond entraînable en translation de manière à amener continuellement la matière à épandre (M) vers lesdits moyens d'expulsion au cours d'un épandage,
**caractérisé en ce qu'**il comporte des moyens de régulation en continu du débit massique au cours d'un épandage, lesdits moyens étant agencés pour mesurer, de manière continue, le débit massique et pour exercer un contrôle de la vitesse du tapis de fond de la remorque.

2. Epandeur selon la revendication 1,
**caractérisé en ce que** les moyens de régulation du débit massique comportent des moyens de mesure et une unité de traitement des mesures et de contrôle de la vitesse d'avancée du tapis de fond.

3. Epandeur selon l'une des revendications 1 et 2,
**caractérisé en ce que** les moyens de mesure en continu du débit massique sont agencés pour mesurer de manière continue la masse de matière à épandre (M) sur le point d'être épandue.

4. Epandeur selon l'une des revendications 1 à 3,
**caractérisé en ce que** l'unité de traitement des mesures comporte au moins des moyens de mémorisation, des moyens de calcul, des moyens de comparaison avec des données préalablement mémorisées et des moyens de commande propres à réguler la vitesse d'avancée du tapis de fond.

5. Epandeur selon l'une des revendications 1 à 4,
**caractérisé en ce que** les moyens de mesure sont constitués par un plateau (3) intégré dans le fond (1) de la remorque à proximité de l'extrémité d'expulsion de ladite remorque, ledit plateau (3) étant agencé pour exercer, sous l'effet de la matière à épandre (M) qu'il supporte, une force sur au moins un capteur de force ou de pression.

6. Epandeur selon la revendication 5,
**caractérisé en ce que** le plateau (3) est intégré dans le fond (1) de manière à être libre de basculer autour d'un axe (4) s'étendant sous ledit plateau (3), sensiblement le long d'un bord longitudinal dudit plateau (3) de telle sorte que la matière à épandre (M) reposant sur le plateau (3) tend à provoquer le basculement dudit plateau (3) autour de l'axe (4).

7. Epandeur selon la revendication 5,
**caractérisé en ce que** le plateau (3) est intégré dans le fond (1) de manière à être libre de basculer autour d'un axe (4) s'étendant le long d'un bord longitudinal dudit plateau (3) de telle sorte que la matière à épandre (M) reposant sur le plateau (3) tend à provoquer le basculement dudit plateau (3) autour de l'axe (4).

8. Epandeur selon la revendication 6,
**caractérisé en ce que**, sous l'autre bord longitudinal du plateau (3), est installé au moins un capteur de force ou de pression.

9. Epandeur selon la revendication 8,
**caractérisé en ce que** deux jauges de contrainte (5) sont installées, sous ledit plateau (3), à chaque extrémité dudit bord.

10. Procédé de régulation du débit massique d'un épandeur selon les revendications 1 à 9,
**caractérisé en ce qu'**on mesure, en continu, le débit massique au cours de l'épandage et on exerce un contrôle de la vitesse d'avancée du tapis de fond (1).

## Claims

1. Spreader for organic material (M) such as manure, slurry, etc., of the type comprising a trailer mounted on wheels that is towed by a tractor or is self-propelled, the said trailer having, at an open end, means for ejection of the material to be spread (M), termed "toothed rollers", and a bottom mat that can be driven in translational movement so as continually to feed the material to be spread (M) towards the said ejection means during a spreading operation,
**characterised in that** it has means for continuous control of the mass discharge rate during a spreading operation, the said means being equipped for continuous determination of the mass discharge rate and for controlling the speed of the bottom mat of the trailer.

2. Spreader according to Claim 1,
**characterised in that** the means for controlling the mass discharge rate comprise measurement means and a unit for processing the measurements and controlling the forward speed of the bottom mat.

3. Spreader according to one of Claims 1 and 2,
**characterised in that** the means for continuous determination of the mass discharge rate are equipped for continuous determination of the mass of material to be spread (M) at the point of being spread.

4. Spreader according to one of Claims 1 to 3,
**characterised in that** the unit for processing the measurements comprises at least memory means, calculation means, means for comparison with data previously stored to memory and control means suitable for controlling the forward speed of the bottom mat.

5. Spreader according to one of Claims 1 to 4,
**characterised in that** the measurement means consist of a plate (3) integrated in the bottom (1) of the trailer close to the ejection end of the said trailer, the said plate (3) being equipped to exert a force on at least one force or pressure sensor under the influence of the material to be spread (M), which said plate supports.

6. Spreader according to Claim 5,
**characterised in that** the plate (3) is integrated in the bottom (1) so as to be free to rock about a shaft (4) extending beneath the said plate (3), essentially along a longitudinal side of the said plate (3) in such a way that the material to be spread (M) bearing on the plate (3) tends to give rise to rocking of the said plate (3) about the shaft (4).

7. Spreader according to Claim 5,
**characterised in that** the plate (3) is integrated in the bottom (1) so as to be free to rock about a shaft (4) extending along a longitudinal side of the said plate (3) in such a way that the material to be spread (M) bearing on the plate (3) tends to give rise to rocking of the said plate (3) about the shaft (4).

8. Spreader according to Claim 6,
**characterised in that** at least one force or pressure sensor is installed below the other longitudinal side of the plate (3).

9. Spreader according to Claim 8,
**characterised in that** two strain gauges (5) are installed, below the said plate (3), at each end of the said side.

10. Method for controlling the mass discharge rate of a spreader according to Claims 1 to 9,
**characterised in that** the mass discharge rate is determined continuously during the spreading operation and the forward speed of the bottom mat (1) is controlled.

## Patentansprüche

1. Streuer für organisches Gut (M), beispielsweise Dung, Gülle usw., der durch ein auf Rädern montiertes Fahrzeug gebildet ist, das geschleppt oder selbstangetrieben ist, wobei das genannte Fahrzeug an einem offenen Ende Mittel zum Ausbringen des zu streuenden Gutes (M), die als "Stachelwalzen" bezeichnet werden, und einen Förderboden aufweist, der translatorisch antreibbar ist, um im Verlauf eines Streuens das zu streuende Gut (M) kontinuierlich zu den genannten Mitteln zum Ausbringen zuzuführen,
**dadurch gekennzeichnet,**
**daß** er Mittel zur kontinuierlichen Regulierung des Massendurchflusses im Verlauf eines Streuens aufweist, wobei die genannten Mittel darauf eingerichtet sind, kontinuierlich den Massendurchfluß zu messen und eine Kontrolle auf die Geschwindigkeit des Förderbodens des Fahrzeugs auszuüben.

2. Streuer nach Anspruch 1,
**dadurch gekennzeichnet, daß** die Mittel zur Regulierung des Massendurchflusses Meßmittel und eine Einheit zur Verarbeitung der Meßwerte und zur Kontrolle der Vorschubgeschwindigkeit des Förderbodens aufweisen.

3. Streuer nach einem der Ansprüche 1 und 2,
**dadurch gekennzeichnet, daß** die Mittel zur kontinuierlichen Messung des Massendurchflusses darauf eingerichtet sind, in kontinuierlicher Weise die Masse des zu streuenden Gutes (M) an dem Streupunkt zu messen.

4. Streuer nach einem der Ansprüche 1 bis 3,
**dadurch gekennzeichnet, daß** die Einheit zur Verarbeitung der Meßwerte wenigstens Speichermittel, Rechenmittel, Mittel zum Vergleich mit zuvor gespeicherten Daten und Steuermittel aufweist, die geeignet sind, die Vorschubgeschwindigkeit des Förderbodens zu regulieren.

5. Streuer nach einem der Ansprüche 1 bis 4,
**dadurch gekennzeichnet, daß** die Meßmittel durch eine Platte (3) gebildet sind, die in dem Boden (1) des Fahrzeugs in der Nähe des Ausbringendes des genannten Fahrzeugs angeordnet ist, wobei die genannte Platte darauf eingerichtet ist, unter der Wirkung des zu streuenden Gutes (M), das sie trägt, eine Kraft auf wenigstens einen Kraft- oder Druckaufnehmer auszuüben.

6. Streuer nach Anspruch 5,
**dadurch gekennzeichnet, daß** die Platte (3) derart in den Boden (1) integriert ist, daß sie um eine Achse (4), die sich unter der genannten Platte (3) erstreckt, im wesentlichen entlang eines Längsrandes der genannten Platte (3) derart kippbar ist, daß zu streuendes Gut (M), das auf der Platte (3) aufliegt, dazu tendiert, das Kippen der Platte (3) um die genannte Achse (4) hervorzurufen.

7. Streuer nach Anspruch 5,
**dadurch gekennzeichnet, daß** die Platte (3) derart in den Boden (1) integriert ist, daß sie um eine Achse (4), die sich entlang eines Längsrandes der genannten Platte (3) erstreckt, derart kippbar ist, daß zu streuendes Gut (M), das auf der Platte (3) aufliegt, dazu tendiert, das Kippen der genannten Platte (3) um die Achse (4) hervorzurufen.

8. Streuer nach Anspruch 6,
**dadurch gekennzeichnet, daß** unter dem anderen Längsrand der Platte (3) wenigstens ein Kraft- oder Druckaufnehmer angeordnet ist.

9. Streuer nach Anspruch 8,
**dadurch gekennzeichnet, daß** an jedem Ende des genannten Randes unter der genannten Platte (3) eine Dehnungsmeßeinrichtung (5) angeordnet ist.

10. Verfahren zur Regulierung des Massendurchflusses eines Streuers nach einem der Ansprüche 1 bis 9,
**dadurch gekennzeichnet, daß** kontinuierlich der Massendurchfluß während des Streuens gemessen wird und daß eine Kontrolle der Vorschubgeschwindigkeit des Förderbodens (1) ausgeübt wird.
